# EUROPEAN PATENT APPLICATION

(11) **EP 4 397 524 A1**
(43) Date of publication of application: **10.07.2024**
(21) Application number: 22864690.7
(22) Date of filing: 01.09.2022
(51) Int. Cl.: B60L 9/18, H02J 7/00, B60L 50/60, B60L 58/12, B60L 58/18, B60L 53/80, H02M 3/155

(54) **ELECTRIC VEHICLE**

(30) Priority: 02.09.2021 JP 2021143529
(71) Applicant: Kabushiki Kaisha F.C.C., Hamamatsu-shi, Shizuoka 431-1394 (JP)
(72) Inventor: SAYED ABDALLAH, Mahmoud Abdelnaby, Hamamatsu-shi, Shizuoka 431-1394 (JP); OHASHI, Tatsuyuki, Hamamatsu-shi, Shizuoka 431-1394 (JP)
(74) Representative: Cohausz & Florack
(86) International application number: PCT/JP2022/032956
(87) International publication number: WO 2023/033108

(57) **Abstract**

Provided is a motor vehicle capable of suppressing shortage of energy of a second power storage device when a vehicle is traveling while reducing the size of the second power storage device, and improving the life of a first power storage device. The motor vehicle includes a first power storage device 4, a second power storage device 5, a power converter 10, a first switch S3 that forms a circuit connecting the power converter 10 and an inverter 2 not via the second power storage device 5, a second switch S4 that forms a circuit connecting the power converter 10 and the inverter 2 via the second power storage device 5, and a third switch S5 that forms a circuit connecting the second power storage device 5 and a ground. During stopping of a motor 1 and/or during power driving of the motor 1, the first switch S3 is set to a connected state, the second switch S4 is set to a disconnected state, and the third switch S5 is set to a connected state, and energy is supplied from the first power storage device 4 to the second power storage device 5 while an output voltage of the first power storage device 4 is stepped down.

## Description

### Technical Field

The present invention relates to a motor vehicle including a motor capable of performing power driving and regeneration, and a power storage device capable of supplying energy to the motor.

### Background Art

For example, PTL 1 describes a motor vehicle that includes a motor capable of performing power driving and regeneration and a power storage device capable of supplying energy to the motor, obtains a thrust by a driving force of the motor, and can recover energy in the power storage device by adjusting a braking torque of driving wheels. According to such a motor vehicle, energy can be supplied to an inverter at a given timing from each of a battery having a large-capacity characteristic and a capacitor having a high-power characteristic to drive the motor.

### Citation List

### Patent Literature

PTL 1: Japanese Unexamined Patent Application Publication No. 2018-166367

### Summary of Invention

### Technical Problem

However, in the above-described related art, although the battery (first power storage device) and the capacitor (second power storage device) can share energy supply to drive the motor, when charging by regeneration is not in time and energy of the capacitor is insufficient, it is necessary to supply energy only from the battery. Even so, since rapid energy supply is necessary at the time of acceleration of the vehicle, for example, when energy is supplied only from the battery, there is a possibility that the battery generates heat due to the rapid energy supply and the life of the battery is shortened. In addition, in order to prevent shortage of energy of the capacitor when the vehicle is traveling, it is conceivable to charge the capacitor with a large amount of energy by using a charger in advance, for example, when the vehicle is not in use. However, in this case, there is a problem in that the size of the capacitor is increased.

The present invention has been made in view of such circumstances and provides a motor vehicle capable of suppressing shortage of energy of the second power storage device when the vehicle is traveling, while reducing the size of the second power storage device, and capable of improving the life of the first power storage device.

### Solution to Problem

An invention according to claim 1 is a motor vehicle including: a motor capable of performing power driving; and an inverter capable of converting a direct current into an alternating current, the motor vehicle including: a first power storage device having a large-capacity characteristic; a second power storage device having a high-power characteristic; a power converter having a function of stepping down a voltage during the power driving; a circuit in which the power converter having the function of stepping down the voltage during the power driving is connected to the first power storage device and in which the second power storage device is connected in series between a reactor of the power converter and the inverter; a first switch that forms a circuit connecting the power converter and the inverter not via the second power storage device; a second switch that forms a circuit connecting the power converter and the inverter via the second power storage device; and a third switch that forms a circuit connecting the second power storage device and a ground, in which, during stopping of the motor and/or during the power driving of the motor, the first switch is set to a connected state, the second switch is set to a disconnected state, and the third switch is set to a connected state, and energy is supplied from the first power storage device to the second power storage device while an output voltage of the first power storage device is stepped down.

According to an invention according to claim 2, in the motor vehicle according to claim 1, it is possible to determine a power storage status of the second power storage device, based on a voltage of the second power storage device, and, in a case where the power storage status of the second power storage device is less than or equal to a predetermined value, the energy is supplied to the second power storage device while the output voltage of the first power storage device is stepped down.

According to an invention according to claim 3, in the motor vehicle according to claim 1 or 2, the motor is capable of performing the power driving and regeneration, the power converter has the function of stepping down the voltage during the power driving and a function of stepping up the voltage during the regeneration, and during the regeneration of the motor, the first switch is set to a disconnected state, the second switch is set to a connected state, and the third switch is set to a disconnected state, and the energy is recovered in the first power storage device and the second power storage device while an output voltage of the second power storage device is stepped up.

According to an invention according to claim 4, in the motor vehicle according to any one of claims 1 to 3, during the power driving of the motor, the first switch is set to a disconnected state, the second switch is set to a connected state, and the third switch is set to a disconnected state, and the energy is supplied from the first power storage device and the second power storage device to the inverter while the output voltage of the first power storage device is stepped down.

According to an invention according to claim 5, in the motor vehicle according to any one of claims 1 to 4, during the power driving of the motor, the first switch is set to a disconnected state, the second switch is set to a disconnected state, and the third switch is set to a connected state, and the energy is supplied from the second power storage device to the inverter.

According to an invention according to claim 6, in the motor vehicle according to claim 5, it is possible to determine a temperature state of the first power storage device, based on a temperature of the first power storage device, and, during the power driving of the motor, in a case where the temperature of the first power storage device is greater than or equal to a predetermined value, the energy is supplied from the second power storage device to the inverter.

According to an invention according to claim 7, in the motor vehicle according to any one of claims 1 to 6, the first power storage device has a higher voltage characteristic than the second power storage device.

According to an invention according to claim 8, in the motor vehicle according to any one of claims 1 to 7, an energy amount of the first power storage device when fully charged is larger than an energy amount of the second power storage device when fully charged.

According to an invention according to claim 9, in the motor vehicle according to any one of claims 1 to 8, the first power storage device includes a replaceable cassette-type power storage device.

According to an invention according to claim 10, in the motor vehicle according to any one of claims 1 to 9, the first power storage device includes a large-capacity lithium ion battery or a large-capacity nickel-metal hydride battery, and the second power storage device includes any one of a high-power lithium ion battery, a high-power nickel-metal hydride battery, a lithium ion capacitor, and an electric double layer capacitor.

### Advantageous Effects of Invention

According to the present invention, during the stopping of the motor and/or during the power driving of the motor, the first switch is set to the connected state, the second switch is set to the disconnected state, and the third switch is set to the connected state, and the energy is supplied from the first power storage device to the second power storage device while the output voltage of the first power storage device is stepped down. Accordingly, it is possible to suppress shortage of energy of the second power storage device when the vehicle is traveling, while reducing the size of the second power storage device, and improve the life of the first power storage device.

### Brief Description of Drawings

[Fig. 1] Fig. 1 is a schematic diagram illustrating a motor vehicle according to an embodiment of the present invention.
[Fig. 2] Fig. 2 is a circuit diagram illustrating a power converter of the motor vehicle.
[Fig. 3] Fig. 3 is a conceptual diagram illustrating the power converter of the motor vehicle.
[Fig. 4] Fig. 4 is a schematic diagram illustrating a control relationship of the motor vehicle.
[Fig. 5] Fig. 5 is a time chart illustrating power control of the motor vehicle.
[Fig. 6] Fig. 6 is a flowchart illustrating the entirety of the power control of the motor vehicle.
[Fig. 7] Fig. 7 is a graph illustrating request characteristics (vehicle request of a driving wheel) of the motor vehicle.
[Fig. 8] Fig. 8 is a graph illustrating request characteristics (motor request of the driving wheel) of the motor vehicle.
[Fig. 9] Fig. 9 is a graph illustrating request characteristics (vehicle request of a driven wheel) of the motor vehicle.
[Fig. 10] Fig. 10 is a graph illustrating request characteristics (brake request of the driven wheel) of the motor vehicle.
[Fig. 11] Fig. 11 is a flowchart illustrating request process control of the power control of the motor vehicle.
[Fig. 12] Fig. 12 is a graph illustrating a driver request table (Table 1) of the motor vehicle.
[Fig. 13] Fig. 13 is a graph illustrating a driver request table (Table 2) of the motor vehicle.
[Fig. 14] Fig. 14 is a graph illustrating a driver request table (Table 3) of the motor vehicle.
[Fig. 15] Fig. 15 is a graph illustrating a driver request table (Table 4) of the motor vehicle.
[Fig. 16] Fig. 16 is a graph illustrating a driver request table (Table 5) of the motor vehicle.
[Fig. 17] Fig. 17 is a graph illustrating a driver request table (Table 6) of the motor vehicle.
[Fig. 18a] Fig. 18a is a flowchart illustrating motor control of the power control of the motor vehicle.
[Fig. 18b] Fig. 18b is a flowchart illustrating the motor control of the power control of the motor vehicle.
[Fig. 19] Fig. 19 is a table illustrating power conversion circuit control of the motor vehicle.
[Fig. 20] Fig. 20 is a graph illustrating a voltage request table (Table A) of the motor vehicle.
[Fig. 21] Fig. 21 is a graph illustrating a voltage request table (Table B) of the motor vehicle.
[Fig. 22] Fig. 22 is a graph illustrating a voltage request table (Table C) of the motor vehicle.
[Fig. 23] Fig. 23 is a graph illustrating a voltage request table (Table D) of the motor vehicle.
[Fig. 24] Fig. 24 is a graph illustrating a voltage request table (Table E) of the motor vehicle.
[Fig. 25] Fig. 25 is a graph illustrating a power storage status of a first power storage device of the motor vehicle.
[Fig. 26] Fig. 26 is a graph illustrating a power storage status of a second power storage device of the motor vehicle.
[Fig. 27] Fig. 27 is a table illustrating combinations of the power storage devices of the motor vehicle.

### Description of Embodiments

Hereinafter, an embodiment of the present invention will be described in detail with reference to the drawings.

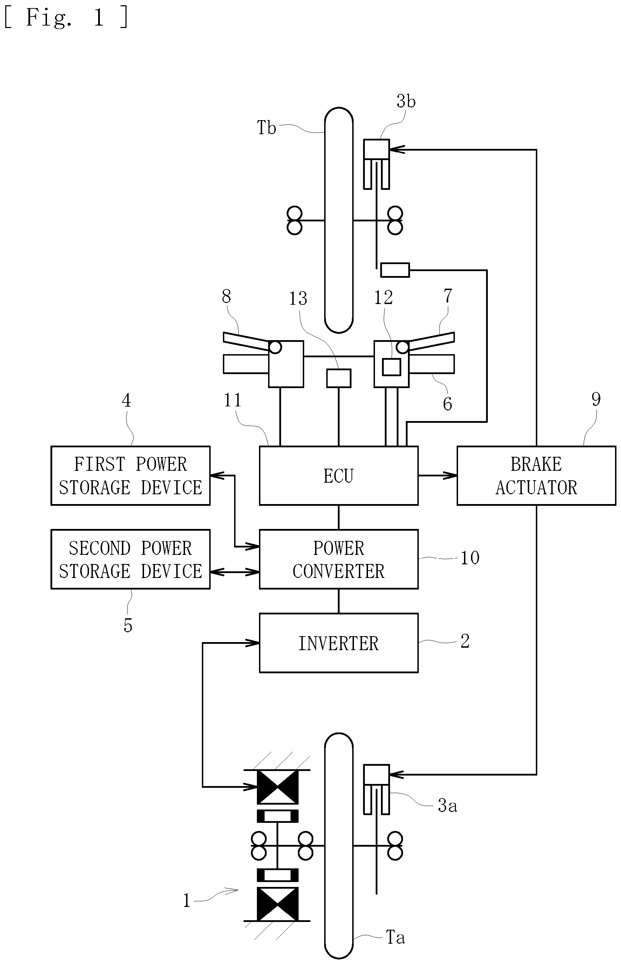

A motor vehicle according to this embodiment includes a saddle-type vehicle such as a motorcycle that can travel by a driving force of a motor. As illustrated in Figs. 1 to 4, the motor vehicle mainly includes a motor 1, an inverter 2, a mechanical brake (3a, 3b), a first power storage device 4, a second power storage device 5, an accelerator operation means 6, a mechanical brake operation means 7, a regenerative brake operation means 8, a power converter 10, an ECU 11, a start switch 12, and a monitor 13 (auxiliary device).

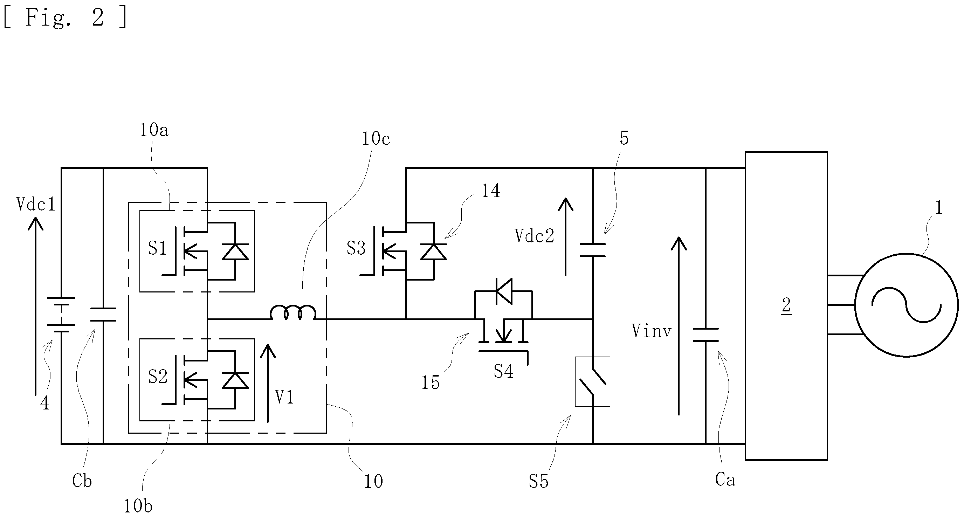

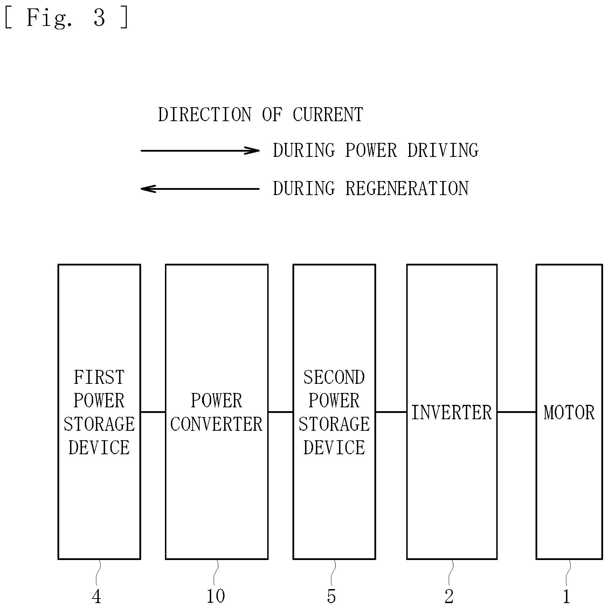

The motor 1 (Motor) includes an electromagnetic motor for obtaining a driving force by energy supply. As illustrated in Figs. 2 and 3, the motor 1 can be electrically connected to the second power storage device 5, the power converter 10, and the first power storage device 4 via the inverter 2, and is capable of performing power driving and regeneration. The inverter 2 (DC-AC inverter) can convert a direct current into an alternating current. In this embodiment, the inverter 2 can convert a direct current of the first power storage device 4 and the second power storage device 5 into an alternating current and supply the alternating current to the motor 1.

The mechanical brake includes a brake device capable of braking by releasing energy, such as a disc brake or a drum brake. The mechanical brake includes a driving-wheel mechanical brake 3a for braking by releasing kinetic energy of a driving wheel Ta and a driven-wheel mechanical brake 3b for braking by releasing kinetic energy of a driven wheel Tb. The driving-wheel mechanical brake 3a and the driven-wheel mechanical brake 3b are connected to the mechanical brake operation means 7 via a brake actuator 9.

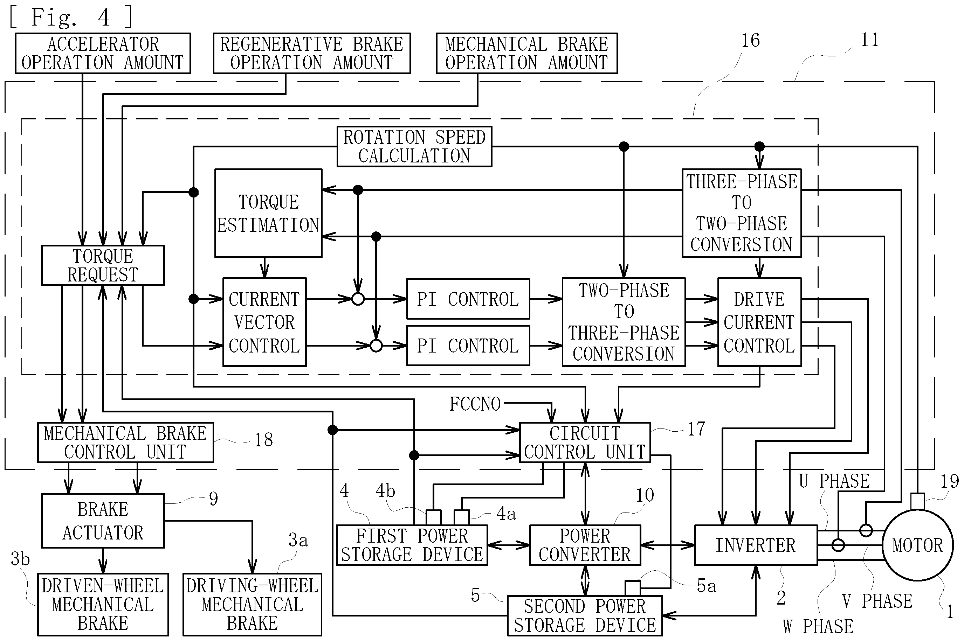

The mechanical brake operation means 7 includes a component capable of controlling the mechanical brake (driven-wheel mechanical brake 3b) to adjust a braking torque (in this embodiment, an operation lever attached to a right end portion of a handlebar). The mechanical brake operation means 7 is configured such that a mechanical brake control unit 18 (see Fig. 4) can actuate the brake actuator 9 in accordance with the operation amount to operate the driven-wheel mechanical brake 3b.

The accelerator operation means 6 includes a component capable of controlling the motor 1 to adjust a driving torque of the driving wheel Ta (in this embodiment, an accelerator grip attached to a right end portion of the handlebar). As illustrated in Fig. 4, the accelerator operation means 6 is configured to estimate a torque request by using an inverter control unit 16 in accordance with the operation amount and actuates the motor 1 to obtain a desired driving force. Note that the inverter control unit 16 is one of control units formed in the ECU 11.

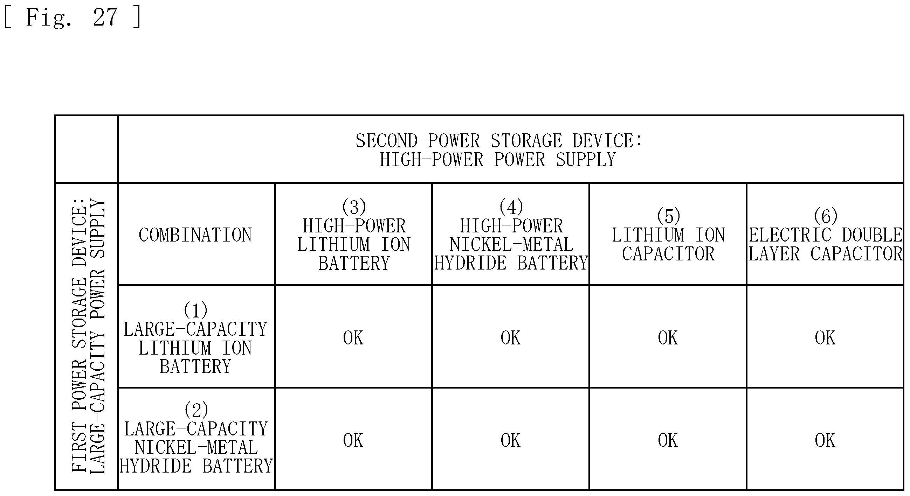

A power storage device is capable of supplying energy to the motor 1. In this embodiment, the power storage device includes the first power storage device 4 and the second power storage device 5. The first power storage device 4 includes a storage battery having a large-capacity characteristic. As illustrated in Fig. 27, for example, a large-capacity lithium ion battery or a large-capacity nickel-metal hydride battery can be used for the first power storage device 4. The second power storage device 5 includes a storage battery having a high-power characteristic. As illustrated in Fig. 27, for example, any one of high-power lithium ion battery, a high-power nickel-metal hydride battery, a lithium ion capacitor, and an electric double layer capacitor can be used for the second power storage device 5.

More specifically, the first power storage device 4 has a higher voltage characteristic than the second power storage device 5, and in addition, an energy amount of the first power storage device 4 when fully charged is larger than an energy amount of the second power storage device 5 when fully charged. In addition, the first power storage device 4 according to this embodiment includes a replaceable cassette-type power storage device that can be removed from the vehicle. In accordance with a power storage status of the first power storage device 4, the first power storage device 4 can be replaced with a first power storage device 4 in a fully charged state.

The regenerative brake operation means 8 includes a component capable of controlling the motor 1 to adjust a braking torque of the driving wheel Ta and recovering energy in the power storage device (first power storage device 4 and second power storage device 5) (in this embodiment, an operation lever attached to a left end portion of the handlebar). The regenerative brake operation means 8 is configured to cause the motor 1 to perform the regeneration in accordance with the operation amount to obtain a desired braking force. By the regeneration of the motor 1, energy can be recovered in the first power storage device 4 and the second power storage device 5.

The power converter 10 has a function of stepping down the voltage during the power driving of the motor 1 (when energy is supplied to the motor 1) and a function of stepping up the voltage during the regeneration of the motor 1 (when energy is recovered from the motor 1). As illustrated in Figs. 2 and 3, the power converter 10 is connected between the first power storage device 4 and the second power storage device 5 in an electric circuit. More specifically, as illustrated in Fig. 2, the power converter 10 includes two semiconductor switching elements (MOSFETs) 10a and 10b and a reactor 10c (coil). The two semiconductor switching elements (MOSFETs) 10a and 10b include switches S1 and S2 and diodes as rectifiers.

According to the power converter 10 according to this embodiment, by rapidly switching (performing duty control of) the switches S1 and S2 of the semiconductor switching elements 10a and 10b, the voltage can be stepped down because the reactor 10c is positioned downstream of the semiconductor switching elements 10a and 10b during the power driving of the motor 1 (when a current flows rightward in Fig. 3), and the voltage can be stepped up because the reactor 10c is positioned upstream of the semiconductor switching elements 10a and 10b during the regeneration of the motor 1 (when a current flows leftward in Fig. 3).

More specifically, as illustrated in Figs. 2 and 3, this embodiment provides a circuit in which the power converter 10 having a function of stepping down the voltage during the power driving is connected to the first power storage device 4 and in which the second power storage device 5 is connected in series between the reactor 10c of the power converter 10 and the inverter 2. Thus, during the power driving of the motor 1, the power converter 10 steps down an output voltage (Vdc1) of the first power storage device 4 to supply energy from the first power storage device 4 and the second power storage device 5 to the inverter 2, and in addition, during the regeneration of the motor 1, the power converter 10 steps up an output voltage (Vinv - Vdc2) of the second power storage device 5 to recover energy in the first power storage device 4 and the second power storage device 5.

This embodiment also provides a first switch S3, a second switch S4, and a third switch S5. As illustrated in Fig. 2, the first switch S3 forms a circuit connecting the power converter 10 and the inverter 2 not via the second power storage device 5, the second switch S4 forms a circuit connecting the power converter 10 and the inverter 2 via the second power storage device 5, and the third switch S5 forms a circuit connecting the second power storage device 5 and the ground (ground connection). Note that capacitors Ca and Cb for stabilization are connected to the circuit according to this embodiment.

Furthermore, the first switch S3 and the second switch S4 according to this embodiment are configured by semiconductor switching elements (MOSFETs) 14 and 15 (including diodes as rectifiers as in the semiconductor switching elements 10a and 10b), and the third switch S5 is configured by a switch capable of switching on/off (connecting or disconnecting) the conduction of current. The first switch S3, the second switch S4, and the third switch S5 can be turned on/off (set to the connected state or the disconnected state) at a given timing under the control of a circuit control unit 17.

The ECU 11 is for controlling the motor 1 and the like in accordance with a request input from a driver. As illustrated in Fig. 4, the ECU 11 includes the inverter control unit 16, the circuit control unit 17, and the mechanical brake control unit 18, and is connected to the inverter 2, the power converter 10, the first power storage device 4, the second power storage device 5, and the brake actuator 9. There are also provided a voltage detection sensor 4a and a temperature detection sensor 4b and also a voltage detection sensor 5a. The voltage detection sensor 4a is capable of detecting the voltage of the first power storage device 4, the temperature detection sensor 4b is capable of detecting the temperature of the first power storage device 4, and the voltage detection sensor 5a is capable of detecting the voltage of the second power storage device 5.

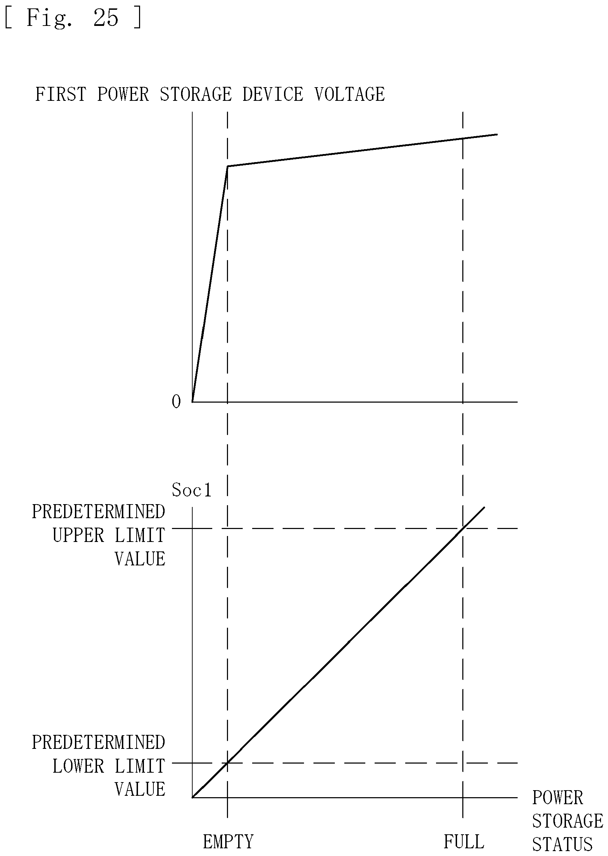

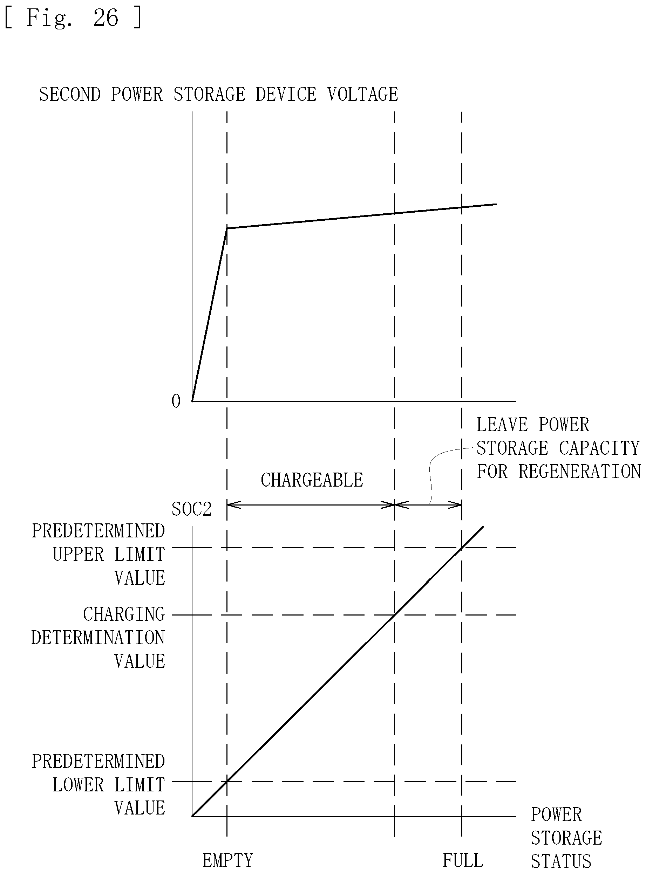

However, the voltage detection sensor 4a, the temperature detection sensor 4b, and the voltage detection sensor 5a are electrically connected to the circuit control unit 17. Thus, the power storage statuses of the first power storage device 4 and the second power storage device 5 can be determined based on the voltages detected by the voltage detection sensor 4a and the voltage detection sensor 5a, and the temperature of the first power storage device 4 can be detected by the temperature detection sensor 4b. Note that the power storage status of the first power storage device 4 is illustrated in Fig. 25, and the power storage status of the second power storage device 5 is illustrated in Fig. 26.

During the power driving of the motor 1, in a case where the power storage status of the second power storage device 5 is less than or equal to a charging determination value (less than or equal to the charging determination value in Fig. 26), the first switch S3 is set to the connected state (ON state), the second switch S4 is set to the disconnected state (OFF state), and the third switch S5 is set to the connected state (ON state), and energy is supplied from the first power storage device 4 to the inverter 2 and the second power storage device 5 while the output voltage (Vdc1) of the first power storage device 4 is stepped down.

That is, during the power driving of the motor 1, by setting the first switch S3 to the connected state (ON state), the second switch S4 to the disconnected state (OFF state), and the third switch S5 to the connected state (ON state), energy is supplied from the first power storage device 4 to the inverter 2 and also to the second power storage device 5 so that the second power storage device 5 can be charged. Similarly, during stopping of the motor 1, by setting the first switch S3 to the connected state (ON state), the second switch S4 to the disconnected state (OFF state), and the third switch S5 to the connected state (ON state), energy is supplied from the first power storage device 4 to the second power storage device 5 while the output voltage (Vdc1) of the first power storage device 4 is stepped down.

In this manner, in the motor vehicle according to the present embodiment, during the stopping of the motor 1 and/or during the power driving of the motor 1, the first switch S3 is set to the connected state, the second switch S4 is set to the disconnected state, and the third switch S5 is set to the connected state, and energy is supplied from the first power storage device 4 to the second power storage device 5 so that the second power storage device 5 can be charged while the output voltage of the first power storage device 4 is stepped down. Furthermore, in the motor vehicle according to this embodiment, during the regeneration of the motor 1, the first switch S3 is set to the disconnected state, the second switch S4 is set to the connected state, and the third switch S5 is set to the disconnected state, and energy can be recovered (regenerative energy can be accumulated) in the first power storage device 4 and the second power storage device 5 while the output voltage (Vinv - Vdc2) of the second power storage device 5 is stepped up.

The motor vehicle according to this embodiment is also configured as follows. During the power driving of the motor 1, in a case where the power storage status of the second power storage device 5 is greater than or equal to a predetermined value (greater than or equal to the predetermined lower limit value in Fig. 26), the first switch S3 is set to the disconnected state, the second switch S4 is set to the connected state, and the third switch S5 is set to the disconnected state, and energy is supplied from the first power storage device 4 and the second power storage device 5 to the inverter 2 while the output voltage of the first power storage device 4 is stepped down.

Furthermore, during the power driving of the motor 1, the first switch S3 is set to the disconnected state, the second switch S4 is set to the disconnected state, and the third switch S5 is set to the connected state, and energy is supplied from the second power storage device 5 to the inverter 2. Specifically, the temperature state of the first power storage device 4 can be determined by the temperature detection sensor 4b, based on the temperature of the first power storage device 4, and, during the power driving of the motor 1, in a case where the temperature of the first power storage device 4 is greater than or equal to a predetermined value, energy is supplied from the second power storage device 5 to the inverter 2 while energy supply from the first power storage device 4 is stopped.

The start switch 12 includes an operation switch that allows the vehicle to travel. By operating the accelerator operation means 6 after the start switch 12 is operated, the motor 1 may be actuated for traveling. The monitor 13 includes an auxiliary device such as a liquid crystal monitor attached to the vehicle. For example, the monitor 13 may display conditions of the vehicle (speed, power storage status, or whether malfunction has occurred) or a map of a navigation system.

Here, as illustrated in Fig. 4, this embodiment provides a detection means 19 including a sensor that detects the rotation speed of the motor 1. When the rotation speed of the motor 1 detected by the detection means 19 is greater than or equal to a predetermined value, a predetermined braking torque in accordance with the operation amount of the regenerative brake operation means 8 is generated by regenerative braking (in particular, in this embodiment, the predetermined braking torque is generated only by the regenerative braking). In addition, during the regeneration of the motor 1, the maximum value of the predetermined braking torque is a rated torque of the motor 1.

Furthermore, when the rotation speed of the motor 1 detected by the detection means 19 is less than the predetermined value, the braking torque is generated by the mechanical brake (driving-wheel mechanical brake 3a) in accordance with the operation amount of the regenerative brake operation means 8. In addition, when a charge level of the first power storage device 4 is greater than or equal to a predetermined value, the braking torque is generated by the mechanical brake (driving-wheel mechanical brake 3a) in accordance with the operation amount of the regenerative brake operation means 8.

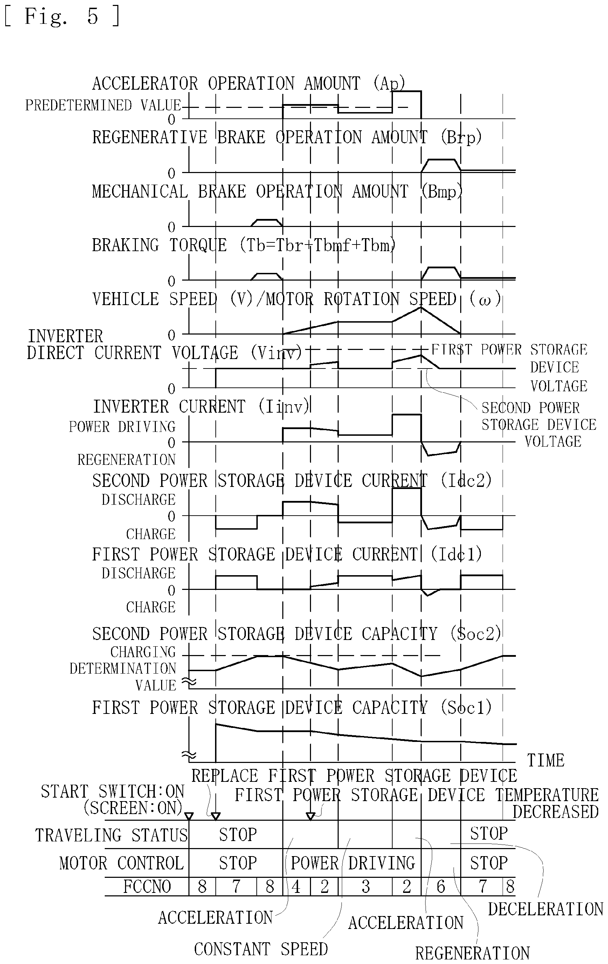

Fig. 5 illustrates changes in parameters in a case where the accelerator operation means 6 and the regenerative brake operation means 8 are operated after the start switch 12 is turned on in the motor vehicle according to the above-described embodiment. In this embodiment, after the start switch 12 is turned on, charging is started and the second power storage device 5 is charged during the stopping of the motor 1 and during the power driving of the motor 1. Note that "FCCNO" (function circuit control number) in the table in Fig. 5 corresponds to "FCCNO" illustrated in Figs. 4, 18b, and 19.

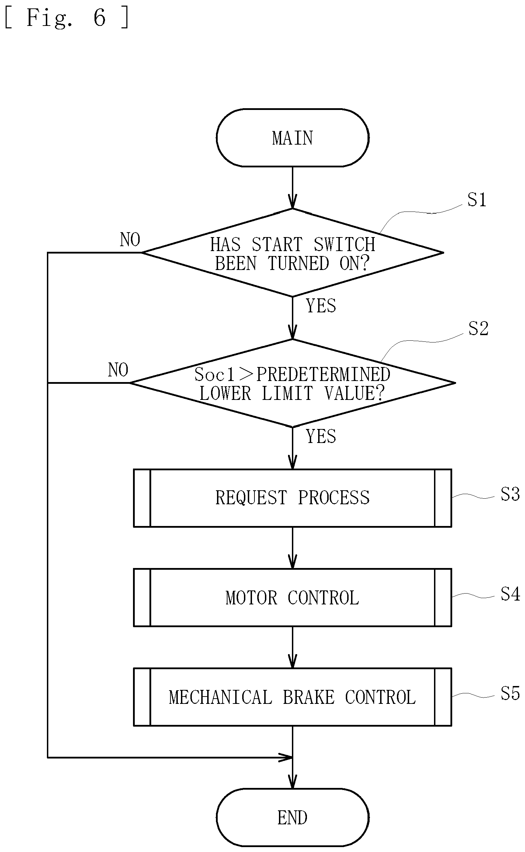

Next, control (main control) of the motor vehicle according to this embodiment will be described with reference to the flowchart in Fig. 6.

First, it is determined in S1 whether the start switch 12 has been turned on. If it is determined that the start switch 12 has been turned on, it is determined in S2 whether the power storage status (Soc1) of the first power storage device 4 is greater than a predetermined lower limit value (see Fig. 25). If it is determined that the power storage status (Soc1) is greater than the predetermined lower limit value, a request process (S3), motor control (S4), and mechanical brake control (S5) are sequentially performed.

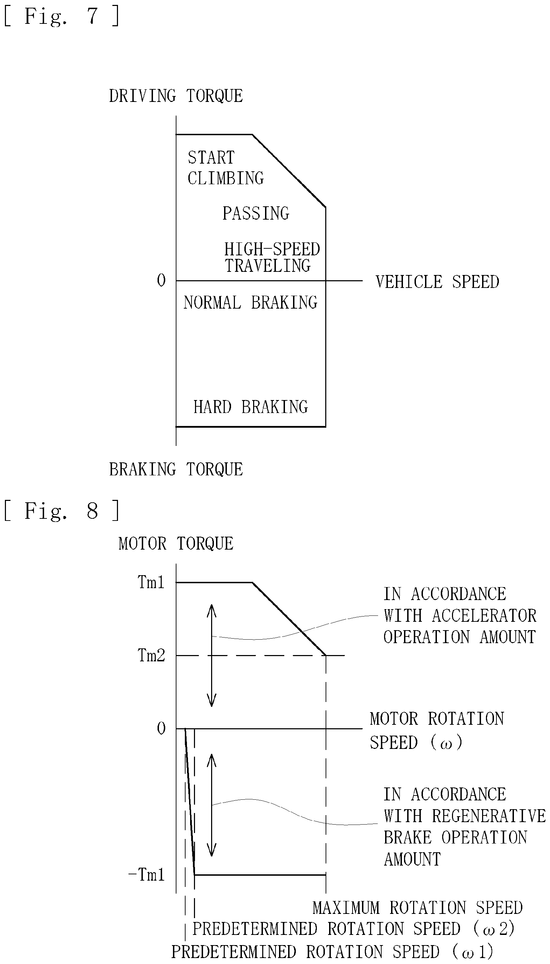

Next, request characteristics of the motor vehicle according to this embodiment will be described with reference to Figs. 7 to 10.

The relationship between each of the driving torque and the braking torque at the driving wheel Ta and a vehicle speed has characteristics as illustrated in Fig. 7, and the relationship between a motor torque at the driving wheel Ta and the rotation speed (ω) of the motor 1 has characteristics as illustrated in Fig. 8. In particular, in Fig. 7, in a case of high-speed traveling, the driving torque gradually decreases relative to the vehicle speed, whereas the braking torque is constant. In Fig. 8, the positive side (upper half) of the vertical axis indicates the driving torque in accordance with the operation amount of the accelerator operation means 6, and the negative side (lower half) of the vertical axis indicates the braking torque in accordance with the operation amount of the regenerative brake operation means 8. A reference sign Tml in Fig. 8 indicates the rated torque of the motor 1.

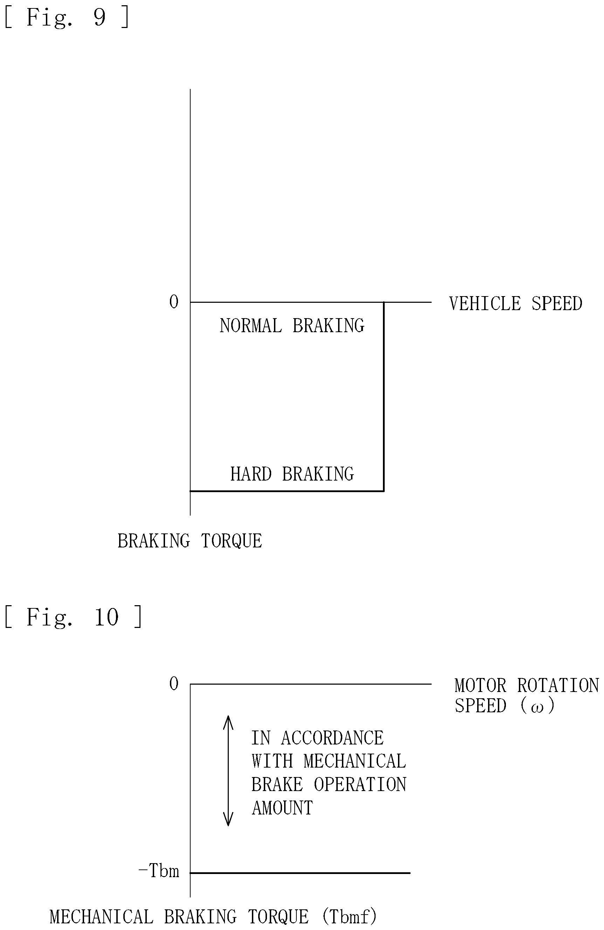

The relationship between the braking torque at the driven wheel Tb and the vehicle speed has the characteristics as illustrated in Fig. 9, and the relationship between the braking torque (mechanical braking torque (Tbmf)) at the driven wheel Tb and the rotation speed (ω) of the motor 1 has the characteristics as illustrated in Fig. 10. Since Figs. 9 and 10 illustrate the characteristics of the driven wheel Tb, only the characteristics (braking torque) on the negative side (lower half) of the vertical axis are illustrated.

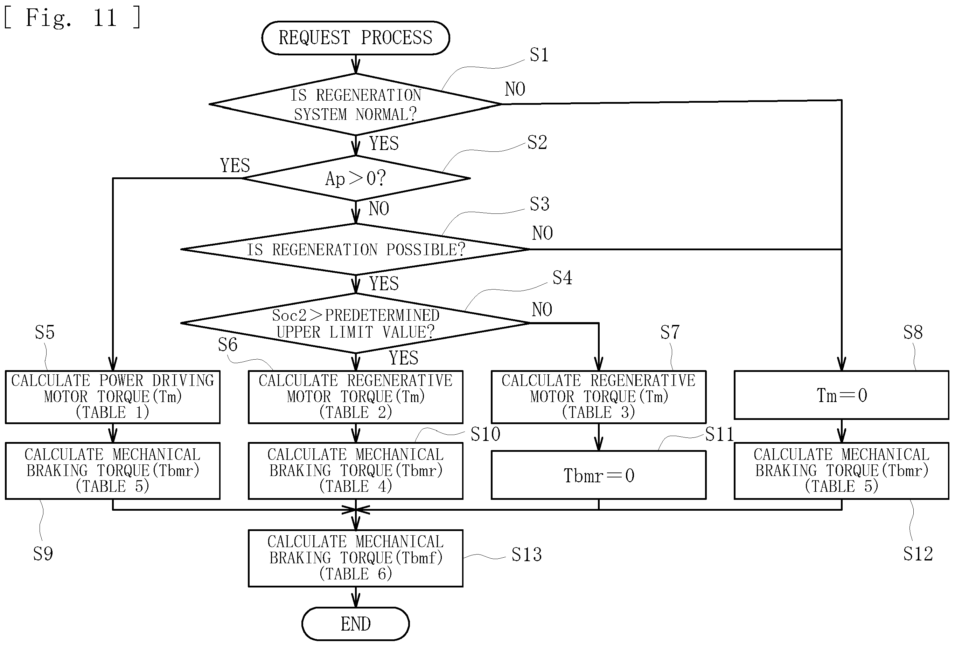

Next, control (request process control) of the motor vehicle according to this embodiment will be described with reference to on the flowchart in Fig. 11.

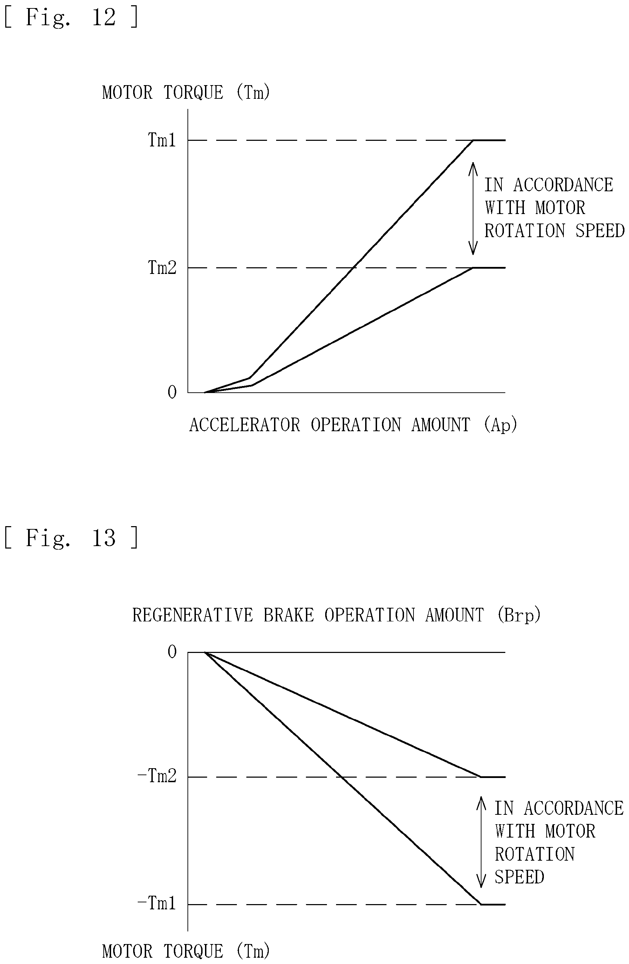

First, it is determined in S1 whether a regeneration system is normal based on the presence or absence of a malfunction signal. If it is determined that there is no malfunction signal, it is determined in S2 whether the accelerator operation means 6 is operated (whether an accelerator operation amount Ap is greater than 0). If it is determined that the accelerator operation means 6 is operated, the process proceeds to S5, and a motor torque (Tm) in accordance with the operation amount of the accelerator operation means 6 is calculated based on Table 1 illustrated in Fig. 12.

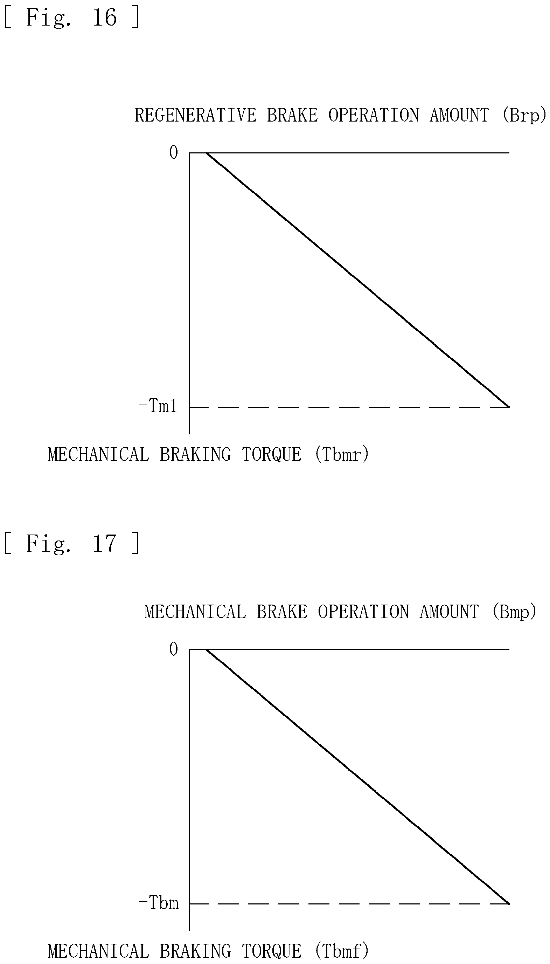

After the calculation in S5, the process proceeds to S9, and a mechanical braking torque (Tbmr) in accordance with the operation amount of the regenerative brake operation means 8 is calculated based on Table 5 illustrated in Fig. 16. Subsequently, the process proceeds to S13, and a mechanical braking torque (Tbmf) in accordance with the operation amount of the mechanical brake operation means 7 is calculated based on Table 6 illustrated in Fig. 17. Note that the mechanical braking torque (Tbmr) calculated in S9 is set as the braking torque of the driving wheel Ta, and the mechanical braking torque (Tbmf) calculated in S13 is set as the braking torque of the driven wheel Tb.

If it is determined in S2 that the accelerator operation means 6 is not operated, it is determined in S3 whether the regeneration of the motor 1 is possible. In this determination, in a case where the power storage status (Soc1) of the first power storage device 4 is less than or equal to a predetermined upper limit value (see Fig. 25) and the rotation speed of the motor 1 is greater than or equal to ω1 (see Fig. 8), it is determined that the regeneration of the motor 1 is possible. If it is determined that the regeneration of the motor 1 is possible, it is determined in S4 whether the power storage status (Soc2) of the second power storage device 5 is greater than a predetermined upper limit value (see Fig. 26).

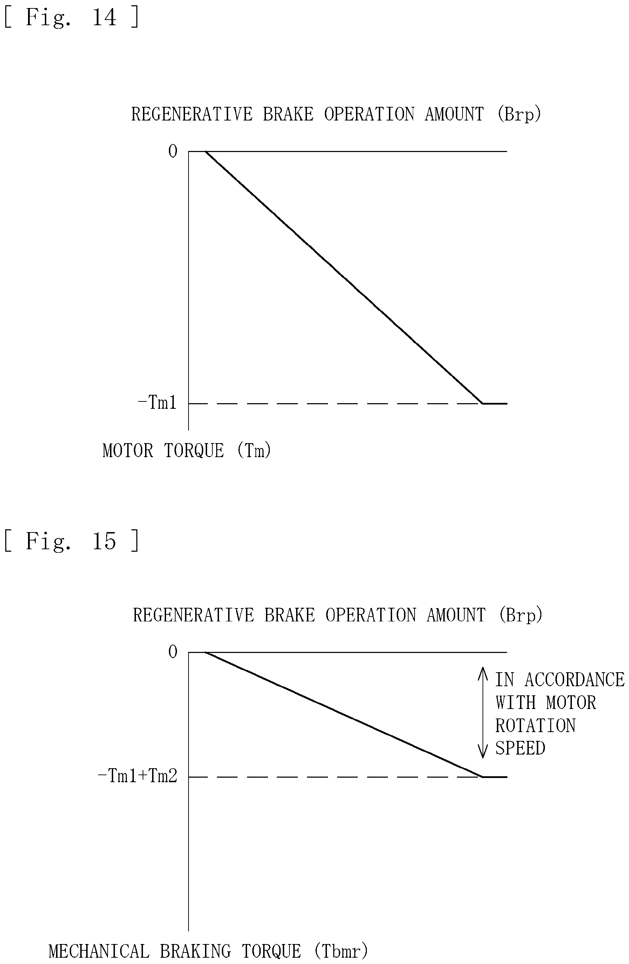

If it is determined in S4 that the power storage status (Soc2) of the second power storage device 5 is greater than the predetermined upper limit value (see Fig. 26), the process proceeds to S6, and the motor torque (Tm) in accordance with the operation amount of the regenerative brake operation means 8 is calculated based on Table 2 illustrated in Fig. 13. Here, in the calculation of the motor torque (Tm) based on Table 2, in a case where the rotation speed of the motor 1 is less than or equal to a predetermined rotation speed (ω2) illustrated in Fig. 8, correction of Tm = Tm(ω - ω1)/(ω2 - ω1) is performed. After the calculation in S6, the process proceeds to S10, and the mechanical braking torque (Tbmr) in accordance with the operation amount of the regenerative brake operation means 8 is calculated based on Table 4 illustrated in Fig. 15. Subsequently, the above-described S13 is sequentially performed.

If it is determined in S4 that the power storage status (Soc2) of the second power storage device 5 is not greater than the predetermined upper limit value (see Fig. 26), the process proceeds to S7, and the motor torque (Tm) in accordance with the operation amount of the regenerative brake operation means 8 is calculated based on Table 3 illustrated in Fig. 14. Here, in the calculation of the motor torque (Tm) based on Table 3, as in the case of Table 2, in a case where the rotation speed of the motor 1 is less than or equal to the predetermined rotation speed (ω2) illustrated in Fig. 8, correction of Tm = Tm(ω - ω1)/(ω2 - ω1) is performed. After the calculation in S7, the mechanical braking torque (Tbmr) is set to 0 in S11. Subsequently, the above-described S13 is performed.

On the other hand, if it is determined in S1 that there is a malfunction signal or if it is determined in S3 that the regeneration is not possible, the process proceeds to S8, and the motor torque (Tm) is set to 0. Subsequently, the process proceeds to S12, and the mechanical braking torque (Tbmr) in accordance with the operation amount of the regenerative brake operation means 8 is calculated based on Table 5 illustrated in Fig. 16. Thus, if it is determined that malfunction has occurred in the regeneration system or if it is determined that the regeneration is not possible, the braking torque can be generated by the mechanical brake (driving-wheel mechanical brake 3a) in accordance with the operation amount of the regenerative brake operation means 8. After the calculation in S12, the above-described S13 is performed.

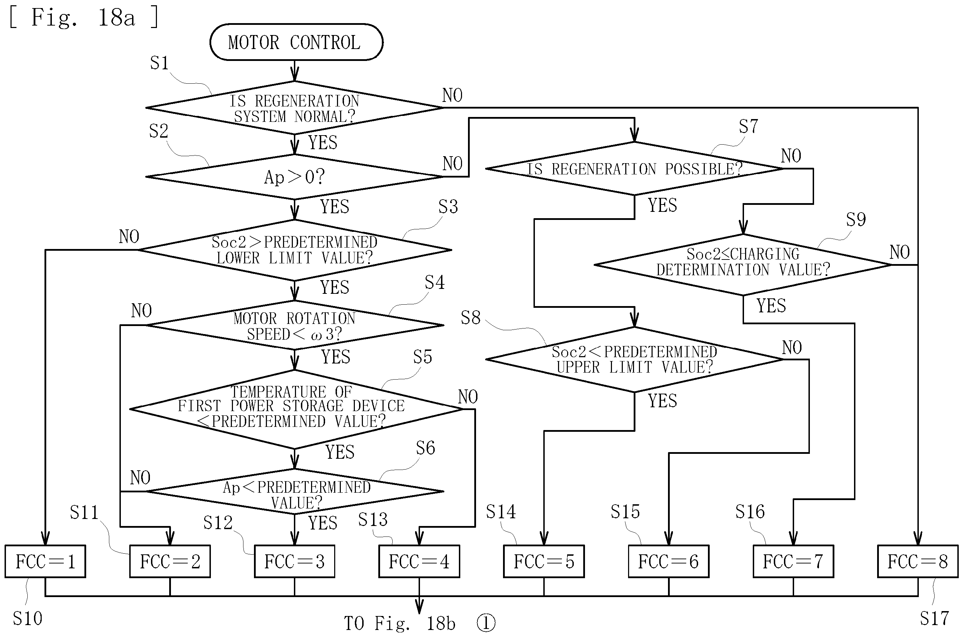

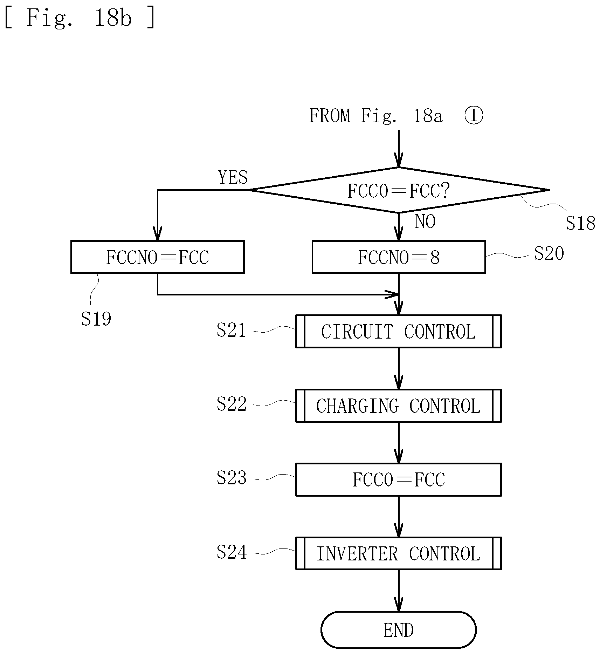

Next, control (motor control) of the motor vehicle according to this embodiment will be described based on the flowcharts in Figs. 18a and 18b.

First, it is determined in S1 whether the regeneration system is normal based on the presence or absence of a malfunction signal. If it is determined that there is no malfunction signal, it is determined in S2 whether the accelerator operation means 6 is operated (whether the accelerator operation amount Ap is greater than 0). If it is determined that the accelerator operation means 6 is operated, it is determined in S3 whether the power storage status (Soc2) of the second power storage device 5 is greater than the predetermined lower limit value (see Fig. 26).

If it is determined in S3 that the power storage status (Soc2) of the second power storage device 5 is not greater than the predetermined lower limit value (see Fig. 26), the process proceeds to S10, and FCC (function circuit control) is set to 1. If it is determined in S3 that the power storage status (Soc2) of the second power storage device 5 is greater than the predetermined lower limit value (see Fig. 26), the process proceeds to S4, and it is determined whether the rotation speed (ω) of the motor 1 is less than ω3.

If it is determined in S4 that the rotation speed (ω) of the motor 1 is not less than ω3, the process proceeds to S11, and FCC is set to 2. If it is determined in S4 that the rotation speed (ω) of the motor 1 is less than ω3, the process proceeds to S5, and it is determined whether the temperature of the first power storage device 4 is less than the predetermined value. If it is determined in S5 that the temperature of the first power storage device 4 is not less than the predetermined value, the process proceeds to S13, and FCC is set to 4. If it is determined in S5 that the temperature of the first power storage device 4 is less than the predetermined value, the process proceeds to S6, and it is determined whether the accelerator operation amount Ap is less than a predetermined value.

Subsequently, if it is determined in S6 that the accelerator operation amount Ap is not less than the predetermined value, the process proceeds to S11, and FCC is set to 2. If it is determined in S6 that the accelerator operation amount Ap is less than the predetermined value, the process proceeds to S12, and FCC is set to 3. On the other hand, if it is determined in S2 that the accelerator operation means 6 is not operated, the process proceeds to S7, and it is determined whether the regeneration of the motor 1 is possible. If it is determined that the regeneration is possible, the process proceeds to S8, and it is determined whether the power storage status (Soc2) of the second power storage device 5 is greater than the predetermined upper limit value.

If it is determined in S8 that the power storage status (Soc2) of the second power storage device 5 is greater than the predetermined upper limit value, the process proceeds to S14, and FCC is set to 5. If it is determined in S8 that the power storage status (Soc2) of the second power storage device 5 is not greater than the predetermined upper limit value, the process proceeds to S15, and FCC is set to 6. If it is determined in S7 that the regeneration of the motor 1 is not possible, the process proceeds to S9, and it is determined whether the power storage status (Soc2) of the second power storage device 5 is less than or equal to the charging determination value.

If it is determined in S9 that the power storage status (Soc2) of the second power storage device 5 is less than or equal to the charging determination value, the process proceeds to S16, and FCC is set to 7. If it is determined in S9 that the power storage status (Soc2) of the second power storage device 5 is greater than the charging determination value, the process proceeds to S17, and FCC is set to 8. Also, if it is determined in S1 that there is a malfunction signal, the process proceeds to S17, and FCC is set to 8.

After the modes (FCC) 1 to 8 are determined as described above, it is determined in S18 whether the mode (FCC) determined in the current process is changed from a mode (FCCO) determined in the previous process. If it is determined that the mode is not changed, the process proceeds to S19, and FCC determined in S10 to 17 is maintained. If it is determined that the mode is changed, the process proceeds to S20, and FCCNO is set to 8. Subsequently, in S21, circuit control in accordance with FCCNO is performed, and in S22, charging control in accordance with FCCNO is performed. Subsequently, in S23, the mode (FCC) determined at the current process is stored as FCCO, and in S24, inverter control is performed.

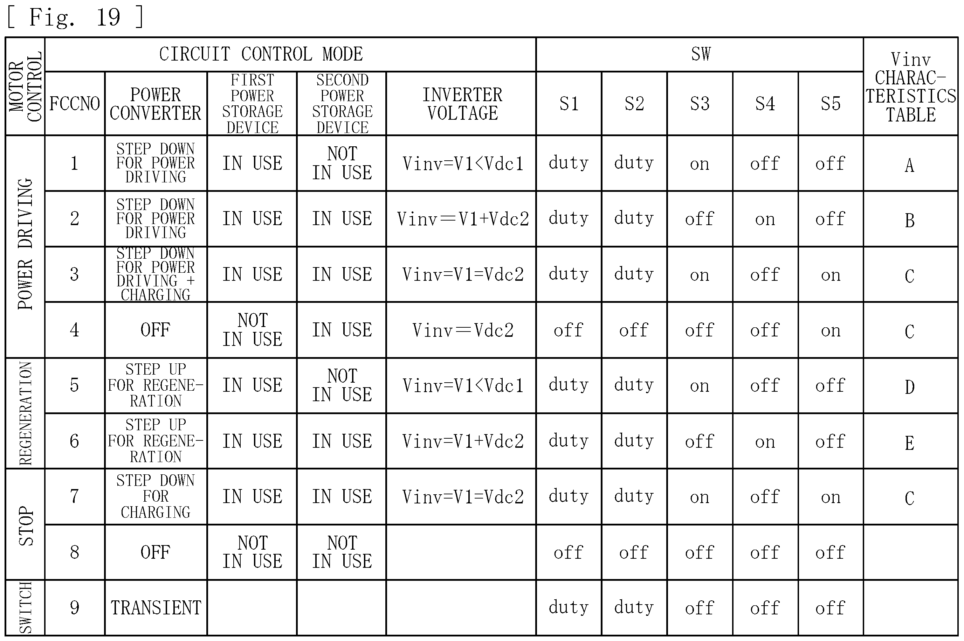

Here, the control in S21 is performed based on the control table in Fig. 19. Details of the control based on the control table will be described below.

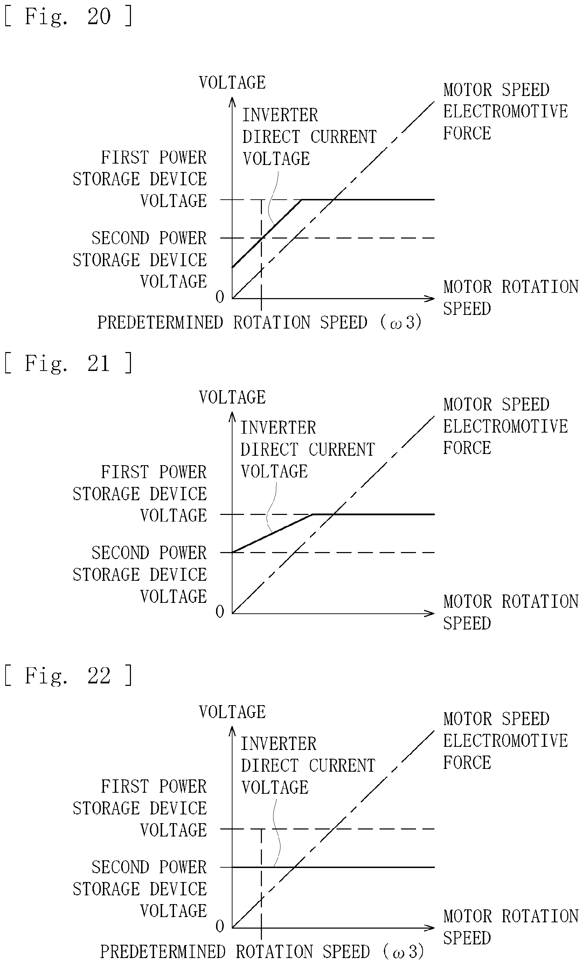

If FCCNO = 1, Duty control is performed on the switches S1 and S2 of the semiconductor switching elements 10a and 10b during the power driving, the power converter 10 steps down the output voltage of the first power storage device 4, the first switch S3 is set to the connected state (on state), the second switch S4 is set to the disconnected state (off state), and the third switch S5 is set to the disconnected state (off state). In addition, if FCCNO = 1, current control of the inverter 2 is performed based on Table A illustrated in Fig. 20.

According to Table A, on the assumption that the current control of the inverter 2 is performed by PWM control (pulse width modulation), as illustrated in Fig. 20, the direct current voltage of the inverter 2 can be controlled in accordance with the rotation speed (ω) of the motor 1. As for Tables B to E to be described later, it is also assumed that the current control of the inverter 2 is performed by PWM control.

If FCCNO = 2, Duty control is performed on the switches S1 and S2 of the semiconductor switching elements 10a and 10b during the power driving, the power converter 10 steps down the output voltage of the first power storage device 4, the first switch S3 is set to the disconnected state (off state), the second switch S4 is set to the connected state (on state), and the third switch S5 is set to the disconnected state (off state). In addition, if FCCNO = 2, the current control of the inverter 2 is performed based on Table B illustrated in Fig. 21.

If FCCNO = 3, Duty control is performed on the switches S1 and S2 of the semiconductor switching elements 10a and 10b during the power driving and during charging, the power converter 10 steps down the output voltage of the first power storage device 4, the first switch S3 is set to the connected state (on state), the second switch S4 is set to the disconnected state (off state), and the third switch S5 is set to the connected state (on state). In addition, if FCCNO = 3, the current control of the inverter 2 is performed based on Table C illustrated in Fig. 22.

If FCCNO = 4, the switches S1 and S2 of the semiconductor switching elements 10a and 10b are set to the off state (the power converter 10 is set to the off state), the first switch S3 and the second switch S4 are set to the disconnected state (off state), and the third switch S5 is set to the connected state (on state). In addition, if FCCNO = 4, the current control of the inverter 2 is performed based on Table C illustrated in Fig. 22.

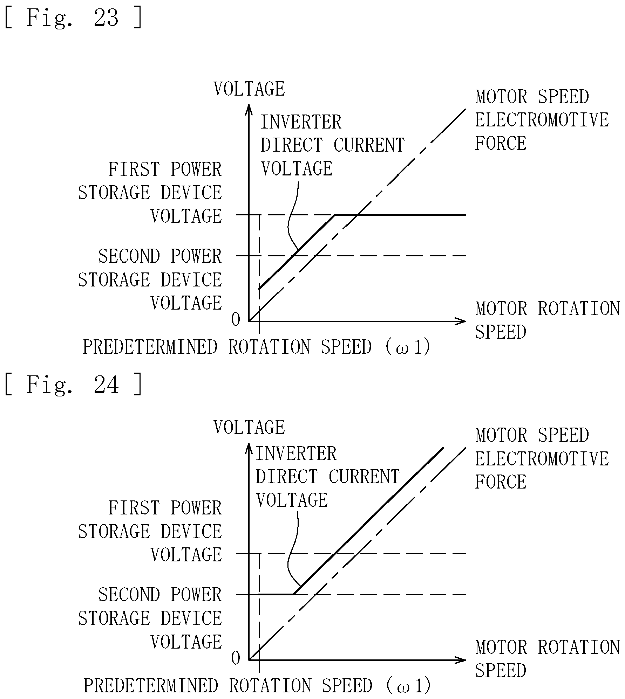

If FCCNO = 5, Duty control is performed on the switches S1 and S2 of the semiconductor switching elements 10a and 10b during the regeneration to step up the voltage, the first switch S3 is set to the connected state (on state), the second switch S4 is set to the disconnected state (off state), and the third switch S5 is set to the disconnected state (off state). In addition, if FCCNO = 5, the current control of the inverter 2 is performed based on Table D illustrated in Fig. 23.

If FCCNO = 6, Duty control is performed on the switches S1 and S2 of the semiconductor switching elements 10a and 10b during the regeneration to step up the voltage, the first switch S3 is set to the disconnected state (off state), the second switch S4 is set to the connected state (on state), and the third switch S5 is set to the disconnected state (off state). In addition, if FCCNO = 6, the current control of the inverter 2 is performed based on Table E illustrated in Fig. 24.

If FCCNO = 7, Duty control is performed on the switches S1 and S2 of the semiconductor switching elements 10a and 10b during the stopping to step down the voltage, the first switch S3 is set to the connected state (on state), the second switch S4 is set to the disconnected state (off state), and the third switch S5 is set to the connected state (on state). In addition, if FCCNO = 7, the current control of the inverter 2 is performed based on Table C illustrated in Fig. 22.

If FCCNO = 8, the switches S1 and S2 of the semiconductor switching elements 10a and 10b are set to the off state (the power converter 10 is set to the off state), the first switch S3, the second switch S4, and the third switch S5 are set to the off state. If FCCNO = 9, Duty control is performed on the switches S1 and S2 of the semiconductor switching elements 10a and 10b, the first switch S3, the second switch S4, and the third switch S5 are set to the off state.

According to the motor vehicle according to the above-described embodiment, during the stopping of the motor 1 and/or during the power driving of the motor 1, the first switch S3 is set to the connected state, the second switch S4 is set to the disconnected state, and the third switch S5 is set to the connected state, and energy is supplied from the first power storage device 4 to the second power storage device 5 while the output voltage (Vdc1) of the first power storage device 4 is stepped down. Thus, during the stopping of the motor 1 and/or during the power driving of the motor 1, the second power storage device 5 can be charged. Accordingly, it is possible to suppress shortage of energy of the second power storage device 5 when the vehicle is traveling, while reducing the size of the second power storage device 5, and improve the life of the first power storage device 4.

In particular, in the motor vehicle according to this embodiment, it is possible to determine the power storage status of the second power storage device 5, based on the voltage of the second power storage device 5, and, in a case where the power storage status of the second power storage device 5 is less than or equal to the predetermined value, the energy is supplied to the second power storage device 5 while the output voltage of the first power storage device 4 is stepped down. Accordingly, the second power storage device 5 can be charged in accordance with the power storage status of the second power storage device 5. In addition, during the regeneration of the motor 1, the first switch S3 is set to the disconnected state, the second switch S4 is set to the connected state, and the third switch S5 is set to the disconnected state, and the energy (regenerative energy) is recovered in the first power storage device 4 and the second power storage device 5. Accordingly, the regenerative energy can be efficiently recovered.

Furthermore, during the power driving of the motor 1, the first switch S3 is set to the disconnected state, the second switch S4 is set to the connected state, and the third switch S5 is set to the disconnected state, and the energy is supplied from the first power storage device 4 and the second power storage device 5 to the inverter 2 while the output voltage of the first power storage device 4 is stepped down. Accordingly, the energy can be supplied from both the first power storage device 4 and the second power storage device 5 to the inverter 2, and the motor vehicle can travel.

Furthermore, during the power driving of the motor 1, the first switch S3 is set to the disconnected state, the second switch S4 is set to the disconnected state, and the third switch S5 is set to the connected state, and the energy is supplied from the second power storage device 5 to the inverter 2. Accordingly, the energy can be supplied from the second power storage device 5 while the first power storage device 4 is stopped, and the motor vehicle can travel. In particular, it is possible to determine the temperature state of the first power storage device 4, based on the temperature of the first power storage device 4, and, during the power driving of the motor 1, in a case where the temperature of the first power storage device 4 is greater than or equal to the predetermined value, the energy is supplied from the second power storage device 5 to the inverter 2. Accordingly, the energy can be supplied from the second power storage device 5 while avoiding overheating of the first power storage device 4, and the motor vehicle can travel.

In addition, the power storage device includes the first power storage device 4 having a large-capacity characteristic and the second power storage device 5 having a high-power characteristic. The power storage device also includes a circuit in which the power converter 10 having the function of stepping down the voltage during the power driving is connected to the first power storage device 4 and in which the second power storage device 5 is connected in series between the reactor 10c of the power converter 10 and the inverter 2, and the energy is recovered in the first power storage device 4 and the second power storage device 5 using the circuit during the regeneration of the motor 1. Accordingly, during the regeneration of the motor 1, the rated torque can be generated only by the regenerative braking to a higher rotation than the motor rotation speed at which the rated torque can be generated only by the first power storage device 4.

Furthermore, during the power driving of the motor, the output voltage of the first power storage device 4 is stepped down, and the energy is supplied from the first power storage device 4 and the second power storage device 5 to the inverter 2. Accordingly, the voltage can be stepped down and stepped up by using the stepping up function of the second power storage device 5 in combination. Therefore, since the output voltage of the first power storage device 4 can be stepped up and stepped down to be adjusted to match the direct current voltage setting of the inverter 2, a storage battery with a standard voltage can be used even when the direct current voltage setting value of the inverter 2 changes, and an increase in manufacturing cost can be prevented.

In particular, according to this embodiment, during the power driving, duty control is performed on the switches S1 and S2 of the semiconductor switching elements 10a and 10b of the power converter 10. Accordingly, stepping up/down control of the inverter direct current voltage of the motor 1 with respect to the voltage of the first power storage device 4 can be optimally performed. In addition, since the first power storage device 4 and the second power storage device 5 share energy supply for the power driving, the current of the first power storage device 4 is reduced as compared with the case where only the first power storage device 4 supplies the same amount of energy for the power driving. Thus, even in a case where the energy for the power driving is large, the current of the first power storage device 4 can be reduced, and the life of the first power storage device 4 can be improved.

However, since the first power storage device 4 has a higher voltage characteristic than the second power storage device 5, the output voltage of the first power storage device 4 can be stepped down to supply the energy to the second power storage device 5. In addition, the energy amount of the first power storage device 4 when fully charged is greater than the energy amount of the second power storage device 5 when fully charged. Accordingly, the energy can be smoothly supplied from the first power storage device 4 to the second power storage device 5. Furthermore, since the first power storage device 4 includes a replaceable cassette-type power storage device, the first power storage device 4 can be replaced in a short time when necessary, and the energy can be stably supplied from the first power storage device 4 to the second power storage device 5.

Although this embodiment has been described above, the present invention is not limited thereto. For example, the first switch S3, the second switch S4, and the third switch S5 may be switches of other forms, and a separately required switch may be added. In addition, the semiconductor switching element may be an IGBT instead of the MOSFET. Furthermore, the present invention may be applied to a vehicle not provided with the monitor 13, or a three-wheel vehicle or a four-wheel vehicle such as a buggy.

### Industrial Applicability

As long as the motor vehicle is a motor vehicle in which, during the stopping of the motor and/or during the power driving of the motor, the first switch is set to the connected state, the second switch is set to the disconnected state, and the third switch is set to the connected state, and the energy is supplied from the first power storage device to the second power storage device while the output voltage of the first power storage device is stepped down, the present invention can be applied to a motor vehicle having a different external shape or having other functions added thereto.

### Reference Signs List

- 1: motor
- 2: inverter
- 3a: driving-wheel mechanical brake
- 3b: driven-wheel mechanical brake
- 4: first power storage device
- 4a: voltage detection sensor
- 4b: temperature detection sensor
- 5: second power storage device
- 5a: voltage detection sensor
- 6: accelerator operation means
- 7: mechanical brake operation means
- 8: regenerative brake operation means
- 9: brake actuator
- 10: power converter
- 10a, 10b: semiconductor switching element (MOSFET)
- 10c: reactor (coil)
- 11: ECU
- 12: start switch
- 13: monitor (auxiliary device)
- 14, 15: semiconductor switching element (MOSFET)
- 16: inverter control unit
- 17: circuit control unit
- 18: mechanical brake control unit
- 19: detection means
- Ta: driving wheel
- Tb: driven wheel
- S3: first switch
- S4: second switch
- S5: third switch
- Ca: smoothing capacitor
- Cb: smoothing capacitor
- Vdc1: first power storage device (battery) voltage
- Vdc2: second power storage device (capacitor) voltage
- Vinv: inverter direct current voltage
- V1: S2 terminal average voltage

## Claims

1. A motor vehicle comprising:
a motor capable of performing power driving; and
an inverter capable of converting a direct current into an alternating current, the motor vehicle comprising:
a first power storage device having a large-capacity characteristic;
a second power storage device having a high-power characteristic;
a power converter having a function of stepping down a voltage during the power driving;
a circuit in which the power converter having the function of stepping down the voltage during the power driving is connected to the first power storage device and in which the second power storage device is connected in series between a reactor of the power converter and the inverter;
a first switch that forms a circuit connecting the power converter and the inverter not via the second power storage device;
a second switch that forms a circuit connecting the power converter and the inverter via the second power storage device; and
a third switch that forms a circuit connecting the second power storage device and a ground, wherein
during stopping of the motor and/or during the power driving of the motor, the first switch is set to a connected state, the second switch is set to a disconnected state, and the third switch is set to a connected state, and energy is supplied from the first power storage device to the second power storage device while an output voltage of the first power storage device is stepped down.

2. The motor vehicle according to claim 1, wherein it is possible to determine a power storage status of the second power storage device, based on a voltage of the second power storage device, and, in a case where the power storage status of the second power storage device is less than or equal to a predetermined value, the energy is supplied to the second power storage device while the output voltage of the first power storage device is stepped down.

3. The motor vehicle according to claim 1 or 2, wherein the motor is capable of performing the power driving and regeneration, the power converter has the function of stepping down the voltage during the power driving and a function of stepping up the voltage during the regeneration, and during the regeneration of the motor, the first switch is set to a disconnected state, the second switch is set to a connected state, and the third switch is set to a disconnected state, and the energy is recovered in the first power storage device and the second power storage device while an output voltage of the second power storage device is stepped up.

4. The motor vehicle according to any one of claims 1 to 3, wherein, during the power driving of the motor, the first switch is set to a disconnected state, the second switch is set to a connected state, and the third switch is set to a disconnected state, and the energy is supplied from the first power storage device and the second power storage device to the inverter while the output voltage of the first power storage device is stepped down.

5. The motor vehicle according to any one of claims 1 to 4, wherein, during the power driving of the motor, the first switch is set to a disconnected state, the second switch is set to a disconnected state, and the third switch is set to a connected state, and the energy is supplied from the second power storage device to the inverter.

6. The motor vehicle according to claim 5, wherein, it is possible to determine a temperature state of the first power storage device, based on a temperature of the first power storage device, and, during the power driving of the motor, in a case where the temperature of the first power storage device is greater than or equal to a predetermined value, the energy is supplied from the second power storage device to the inverter.

7. The motor vehicle according to any one of claims 1 to 6, wherein the first power storage device has a higher voltage characteristic than the second power storage device.

8. The motor vehicle according to any one of claims 1 to 7, wherein an energy amount of the first power storage device when fully charged is larger than an energy amount of the second power storage device when fully charged.

9. The motor vehicle according to any one of claims 1 to 8, wherein the first power storage device comprises a replaceable cassette-type power storage device.

10. The motor vehicle according to any one of claims 1 to 9, wherein the first power storage device comprises a large-capacity lithium ion battery or a large-capacity nickel-metal hydride battery, and the second power storage device comprises any one of a high-power lithium ion battery, a high-power nickel-metal hydride battery, a lithium ion capacitor, and an electric double layer capacitor.
